# EUROPEAN PATENT SPECIFICATION

(11) **EP 1 885 779 B1**
(45) Date of publication and mention of the grant of the patent: **27.10.2010**
(21) Application number: 06766416.9
(22) Date of filing: 26.05.2006
(51) Int. Cl.: B29C 41/24, B29C 41/30, C08J 9/28

(54) **METHOD FOR PRODUCING SELF-ASSEMBLED CONSTRUCTION**
VERFAHREN ZUR HERSTELLUNG EINER SELBSTORGANISIERTEN KONSTRUKTION
PROCEDE DE FABRICATION D'UNE CONSTRUCTION AUTO-ASSEMBLEE

(30) Priority: 27.05.2005 JP 2005156242
(43) Date of publication of application: 13.02.2008
(73) Proprietor: Fujifilm Corporation, Minato-ku Tokyo 106-8620 (JP)
(72) Inventor: YAMAZAKI, Hidekazu, Minami-ashigara-shi, Kanagawa; 2500193 (JP); ITOU, Kouju, Minami-ashigara-shi, Kanagawa; 2500193 (JP)
(74) Representative: Grünecker, Kinkeldey, Stockmair & Schwanhäusser Anwaltssozietät
(86) International application number: PCT/JP2006/311031
(87) International publication number: WO 2006/126735

(56) References cited:
- WO-A-01/58655
- WO-A-2006/059984
- WO-A1-2006/014009
- WO-A2-02/45868
- JP-A- 02 060 942
- JP-A- 07 011 018
- JP-A- 2000 319 442
- JP-A- 2001 157 574
- JP-A- 2002 086 476
- JP-A- 2004 303 729
- JP-A- 2006 007 115
- US-A1- 2003 141 618
- US-A1- 2004 266 919

## Description

### Technical Field

The present invention relates to a method for producing a self-assembled construction, more particularly, the present invention relates to a method for producing the self-assembled construction in a film form.

### Background Art

Recently, in the fields of optical materials and electronic materials, higher integration density, information of higher density, and image information with higher definition are required increasingly. For that reason, formation of a microstructure (hereinafter referred to as a micropattern structure) is strongly required for films used in such fields. Especially, in the field of regenerative medical research, the film having the micropattern structure on its surface is effectively used as a cell culture substrate (for instance, see Japanese Patent Laid-Open Publication No. 2001-157574).

As technologies for forming the micropattern structure on the film surface, a vapor deposition method using a mask, a photolithography technique using photochemical reaction and polymerization reaction, a laser ablation technique and so forth are known and actually used.

It is known that a film having a micron-scale honeycomb structure is obtained by casting a dilute solution of polymer having a particular structure under a high-humidity condition (see, for instance, Japanese Patent Laid-Open Publications No. 2002-335949 and 2002-347107). Further, films containing functional fine particles in the honeycomb structure are used as the optical and electronic materials. For instance, if the fine particles are the light emitting materials, the film is used as a display device (see, for instance, Japanese Patent Laid-Open Publication No. 2003-128832).

Further, the film having the micropattern structure is also used in a polarizing filter. The film has, for instance, a moth-eye structure in which the micropattern structure with the size from submicrometers to several tens of micrometers is regularly formed for achieving an antireflective function. In a mainstream method for forming the moth-eye structure, a plate is made by using micro-processing technique, for instance the photolithography, and the structure of the film is transferred to the substrate (see, for instance, Japanese Patent Laid-Open Publication No. 2003-302532).

The method described in Japanese Patent Laid-Open Publication No. 2003-302532 is called a top-down approach. In the top-down approach, the plate is produced for forming the microstructure. The plate is produced through many complicated procedures, and the cost is increased. Additionally, it is difficult to produce the plate having a large area. To solve the above problems, a bottom-up approach is suggested. In the bottom-up approach, the self-assembled construction having the microstructure, that is, a self-assembled film, is produced by utilizing a self-assembly of the self-assembled construction through which a systematically-arranged micropattern structure is spontaneously formed. A polymer solution used in the bottom-up approach has a low viscosity. However, when the wet film is formed by casting the polymer solution, a thickness of the wet film is increased. For that reason, the polymer solution spreads at the edges of the wet film. As a result, the area of the self-assembled construction having the uniform structure, particularly, the uniform thickness is restricted.

An object of the present invention is to provide a method for producing the self-assembled construction having the uniform structure, particularly the uniform thickness.

### Disclosure of Invention

Inventors found out that it is effective to provide a frame for preventing spreading of a polymer solution or areas with different wettability on a support for reducing nonuniform areas, especially with uneven thickness, in a micropattern structure of a self-assembled construction. By casting a high polymer solution onto a support, a self-assembled construction with a uniform microstructure, particularly, with a uniform thickness is obtained. Further, by using the support with a long length, the film with the microstructure with the uniform thickness is continuously obtained. Note that in the present invention, the film with the microstructure refers to a film in which droplets and the like are arranged in a self-assembled manner and a systematic structure is formed in the film by evaporating the droplets.

In a producing method for a self-assembled construction of the present invention, a casting film is formed by casting a liquid including an organic solvent and a polymer compound onto a support. Droplets are formed in the casting film, and the organic solvent and the droplets are evaporated from the casting film so that pores are formed at positions of the droplets. A viscosity of the liquid is in a range of not less than 1×10⁻⁴ Pa·s and not more than 10 Pa·s. A thickness of the casting film formed immediately after casting the liquid onto the support is in a range of not less than 0.05mm and not more than 1.5mm.

In the producing method for the self-assembled construction of the present invention, the casting film is formed by casting the liquid including the organic solvent and the polymer solution onto the support, and the droplets are formed in the casting film so that the pores are formed at the positions of the droplets by evaporating the droplets and the organic solvent. A step for defining an edge of the casting film is provided on the support.

The step is preferably formed on the support by previously processing a surface of the support. A frame member is preferably attached to the casting surface of the support to form the step. A height of the step is preferably a difference between a depth of a depressed section of a substrate in which the support is fit and a thickness of the support.

The liquid is preferably cast while the liquid or the support is being moved. The plural casting areas are preferably formed in the support.

The thickness of the casting film is preferably in a range from not less than 0.01mm and not more than 2.00mm.

The casting surface of the support preferably has a first area onto which the liquid is cast, and a second area in which a contact angle to the liquid is larger than the first area to prevent spreading of the liquid.

In a producing method for the self-assembled construction of the present invention, the casting film is formed by casting the liquid including the organic solvent and the polymer compound onto the support. The droplets are formed in the casting film, and the organic solvent and the droplets are evaporated from the casting film so that pores are formed at positions of the droplets. The casting surface of the support preferably has the first area onto which the liquid is cast, and the second area in which the contact angle to the liquid is larger than the first area to prevent spreading of the liquid.

The liquid is preferably cast onto the support continuously or intermittently.

The support preferably protects the self-assembled construction when the self-assembled construction is being stored.

The liquid is preferably cast onto a support with a long length being transported. The casting film is humidified to form the droplets.

The liquid is preferably cast onto plural supports while the supports are being transported. The casting films are humidified to form the droplets.

A protective film for protecting the self-assembled construction is preferably attached to the self-assembled construction. The self-assembled construction is preferably peeled off together with the protective film from the support. An adhesive layer is preferably provided between the protective layer and the self-assembled construction.

The surface roughness (Ra) of the casting surface of the support is not less than 0.05µm and not more than 5µm.

It is preferable that the self-assembled construction is a film.

According to the producing method for the self-assembled construction of the present invention, the casting film is formed by casting the liquid including the organic solvent and the polymer compound onto the support. The droplets are formed in the casting film, and the organic solvent and the droplets are evaporated from the casting film so that pores are formed at positions of the droplets. Since the viscosity of the liquid is in the range of not less than 1×10⁻⁴ Pa·s and not more than 10 Pa·s, and the thickness of the casting film formed immediately after casting the liquid onto the support is in a range of not less than 0.05mm and not more than 1.5mm, the thickness of the casting film becomes uniform and the structure of the pores in the self-assembled construction becomes uniform.

According to the producing method of the present invention, since the liquid is cast onto the support having the step which defines the edge of the casting film, the thickness of the casting film becomes uniform and the structure of the pores in the self-assembled construction becomes uniform.

According to the producing method of the present invention, since the casting surface of the support preferably has the first area onto which the liquid is cast, and the second area in which the contact angle to the liquid is larger than the first area to prevent spreading of the liquid, the thickness of the casting film becomes uniform and the structure of the pores in the self-assembled construction becomes uniform.

According to the producing method of the present invention, since the support is of the long length, and the liquid is cast onto the support, and the cast film is humidified and dried while the support is being transported, the self-assembled construction of the long length is produced. Further, a plurality of the self-assembled construction is obtained by casting the liquid onto the plural supports and humidifying and drying the cast films while the supports are being transported.

In the producing method of the present invention, since the protective film for protecting the self-assembled construction is attached to the self-assembled construction, and the self-assembled construction is peeled off together with the protective film from the support, the contamination of the self-assembled construction is prevented.

According to the production method for the self-assembled construction of the present invention, since the self-assembled construction is produced in the film form, an easy-to-handle construction with excellent flexibility is obtained.

### Brief Description of Drawings

Fig. 1 is a process drawing of a method for producing a self-assembled construction having the micropattern structure of the present invention;
Fig. 2A, 2B and 2C are explanatory views illustrating a configuration to produce a self-assembled construction by using a support;
Fig. 3 is a schematic view illustrating a support used in an embodiment of the present invention;
Fig. 4 is a schematic view illustrating a support used in another embodiment;
Fig. 5 is a schematic view illustrating a support used in another embodiment;
Fig. 6 is a section view taken along a line VI-VI of FIG.5;
Fig. 7A, 7B and 7C are schematic views illustrating a support used in another embodiment, and are also explanatory views illustrating another configuration to produce the self-assembled construction;
Fig. 8 is a schematic view illustrating a support used in another embodiment;
Fig. 9 is a schematic view illustrating a support used in another embodiment;
Fig. 10 is a schematic view illustrating a support used in another embodiment;
Fig. 11 is a schematic view illustrating a self-assembled construction producing apparatus used in another embodiment;
Fig. 12A, 12B, 12C and 12D are schematic views illustrating a condensation process and a drying process in another embodiment;
Fig. 13 is a section view of the self-assembled construction produced according to the present invention;
Fig. 14A, 14B, 14C and 14D are schematic views of the self-assembled construction produced according to another embodiment of the present invention; and
Fig. 15 is a process drawing illustrating an embodiment in which a protective layer is attached to the self-assembled construction of the present invention.

### Best Mode for Carrying Out the Invention

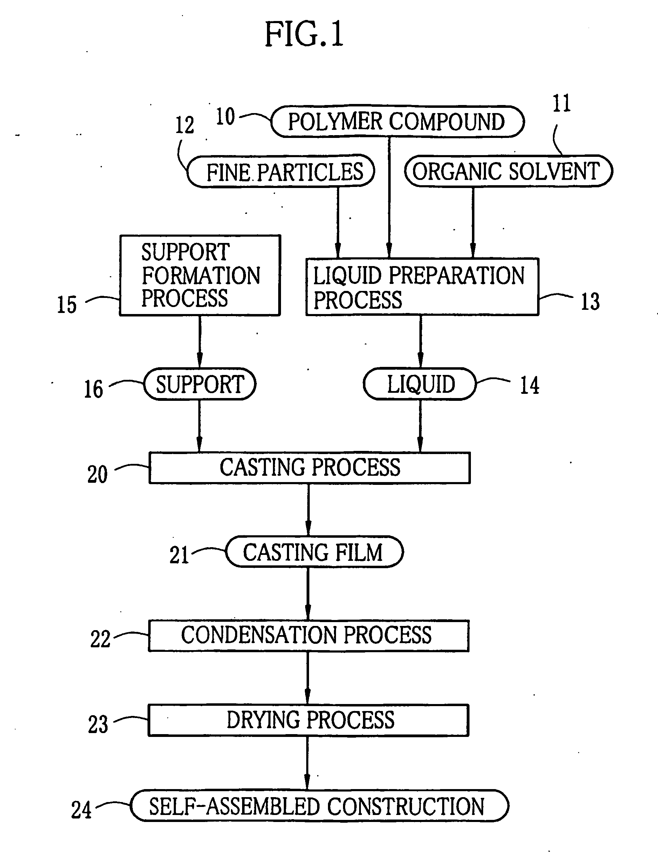

In Fig.1, in a liquid preparation process 13, a polymer solution (hereinafter, a liquid 14) is prepared from a polymer compound 10, an organic solvent 11 and an additive such as fine particles 12 as necessary. Further, in a support formation process 15, a support 16 is produced. In a casting process 20, the liquid 14 is cast or coated onto the support 16 to form a casting film 21. In a condensation process 22, droplets of water as the main constituent are formed in the casting film 21. In a drying process 23, the droplets and the organic solvent 11 in the casting film 21 are evaporated to obtain a self-assembled construction 24. Note that the evaporation of the organic solvent 11 also includes the volatilization of the organic solvent 11. It is also possible to contain a functional substance in the self-assembled construction 24 to obtain a functional construction (a functional film). [polymer compound]

As the polymer compound 10 which is a main component of the self-assembled construction 24, polymer compounds soluble in water-insoluble solvents (hereinafter referred to as lipophilic polymer compounds), such as poly-ε-caprolactone, poly-3-hydroxybutyrate, agarose, and poly-2-hydroxyethylacrylate, polysulfone are preferably used. Especially, poly-ε-caprolactone which is easily obtained at low cost is preferably used.

It is possible to form the self-assembled construction 24 only from the lipophilic polymer compound(s). However, it is preferable to add amphipathic material, for instance, amphipathic polymer compound such as amphipathic polyacrylamid. The mixing ratio of the lipophilic polymer compound and the amphipathic polyacrylamid is preferably from 5:1 to 20:1 in weight ratio.

### [Organic solvent]

As the organic solvent 11 in which the polymer compound 10 is dissolved to prepare the liquid 14, there are chloroform, dichloromethane, tetrachlomethane, cyclohexane, methyl acetate, and the like. However, the organic solvent 11 is not particularly limited as long as the polymer compound 10 is dissolved therein. Polymer concentration upon casting may be within the range capable of forming the casting film, specifically the range of not less than 0.1 wt% and not more than 30 wt.%. If the polymer concentration is less than 0.1 wt.%, the productivity of the self-assembled construction 24 may decrease which makes the self-assembled construction 24 not suitable for the industrial mass-production. If the polymer concentration exceeds 30 wt.%, the casting film is dried in the drying process 23 before the droplets grow to an appropriate size in the condensation process 22. As a result, it may become difficult to form a desirable structure, for instance, a honeycomb structure.

### [Fine particles]

In the present invention, agglomeration of the polymer compounds in the casting film 21 is facilitated by including the fine particles 12 into the liquid 14. The sort and the size (average particle diameter) of the fine particles are not particularly limited.

### [Other additives]

To impart functionality in the self-assembled construction 24, it is possible to previously add an additive in the liquid 14 which exert the functionality. As the additive, the sort and the amount of the additive are not particularly limited.

### [Liquid preparation process]

Methods for preparing the liquid 14 in the liquid preparation process 13 is not particularly limited and known liquid preparation methods may be applied. In particular, the organic solvent 11 at room temperature is stirred while the polymer compound 10 in a powder form is added thereto. Thereby, the polymer compound 10 is dissolved in the organic solvent 11 to form the polymer solution. Thereafter, in the polymer solution, a desired additive is added, stirred and dissolved to obtain a solution. The fine particles are added to the solution and stirred to obtain the liquid 14 in which the fine particles are uniformly dispersed. The viscosity of the liquid 14 is preferably in the range of not less than 1×10⁻⁴ Pa·s and not more than 10 Pa·s. Note that in the present invention, the liquid 14 at least contains the organic solvent 11 and the polymer compound 10.

In the following embodiments, the viscosity of the liquid 14 is measured by using a viscometer of a tuning fork type produced by A&D Co., Ltd. The temperature of the liquid 14 at the time of the measurement is 20°C ± 1°C. The measurement is performed at the room temperature, that is, 15°C-20°C. Note that in the present invention, the method for measuring the viscosity is not limited to the above, and other methods may also be used. If the other method is used, the correlation between the obtained data and the data obtained by the above method is previously determined so as to calculate the range of viscosity corresponding to the range of not less than 1×10⁻⁴ Pa·s and not more than 10 Pa·s measured by the above method.

When the viscosity of the liquid 14 is less than 1×10⁻⁴ Pa·s, the cohesive force is too weak so that the liquid 14 may flow over a predetermined area. When the viscosity of the liquid 14 exceeds 10 Pa·s, the viscosity may be too high. In this case, it may become difficult to make a surface of the cast film 21 uniform in the casting process 20. Note that the additives may not be necessarily contained in the liquid 14. It is also possible to add the additives to the produced self-assembled construction 24 to obtain the self-assembled construction 24 having a desired functionality.

### [Support formation process]

In the support formation process 15, a frame 31 is previously provided on a substrate 30 of the support 16. A surface of the substrate 30 surrounded by the frame 31 is referred to as a casting area 30a. Thus, a step which defines the edge of the casting film 21 is provided in the casting area 30a. A height t1 (mm) of the frame 31 is not particularly limited. However, when the height t1 (mm) is too low, the cast liquid 14 may overflow the frame 31 so that the self-assembled construction 24 of the desired shape may not be obtained. When the height t1 (mm) is too high, a special tool may be necessary to make the surface of the casting film 21 in the casting process 20 smooth, which is disadvantageous in terms of cost.

The material of the substrate 30 is not particularly limited. Glass, metals, and plastics with solvent resistance may be used. Further, the material of the frame 31 is not particularly limited. However, it is preferable to use the same material as the substrate 30. The method for attaching the frame 31 to the substrate 30 is not particularly limited. For instance, an adhesive with the excellent solvent resistance may be used. When the metals are used as the materials of the substrate and the frame 31, welding may also be used.

Note that the surface roughness (Ra) of the support 16 to which the liquid 14 is cast is preferably not less than 0.05µm and not more than 5µm. When the surface roughness (Ra) is less than 0.05µm, the liquid 14 may not be spread onto the surface of the support 16 due to the surface tension thereof. When the surface roughness (Ra) exceeds 5µm, the formation of the self-assembled construction may become difficult.

### [Casting process]

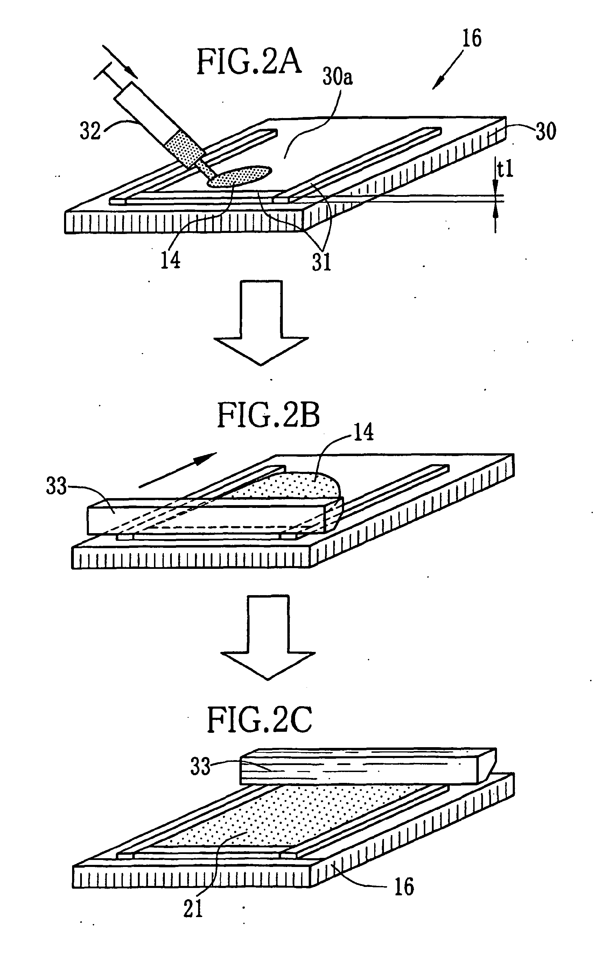

As shown in Fig. 2A, a predetermined amount of the liquid 14 is cast onto the casting area 30a by using a casting device 32. Then, as shown in Figs. 2B and 2C, the surface of the cast liquid 14 is leveled by using a scraper blade 33 to make the surface of the casting film 21 smooth. The edge of the casting film 21 is defined by the frame 31. At this time, the thickness of the casting film 21 is (hereinafter referred to as a wet film thickness) is preferably not less than 0.05mm and not more than 1. 5mm. When the wet film thickness is less than 0.05mm, it becomes difficult to form the droplets in the casting film 21 during the condensation process 22. When the wet film thickness exceeds 1. 5mm, the time required for forming the droplets may become too long, which may decrease the productivity of the self-assembled construction 24. In addition, the shapes of the droplets may be varied. As a result, the structure in the self-assembled construction 24, for instance, the honeycomb structure may become irregular. In the present invention, note that a device used for leveling the surface of the liquid 14 is not limited to the scraper blade. For instance, a roller and the like may be used. Further, the wet film thickness may also be not less than 0.01mm and not more than 2.0mm.

Further, a method is also used in which the liquid 14 with the viscocity not less than 1×10⁻⁴ Pa·s and not more than 10 Pa·s is cast onto the support having the step which defines the edge of the film.

### [Other supports]

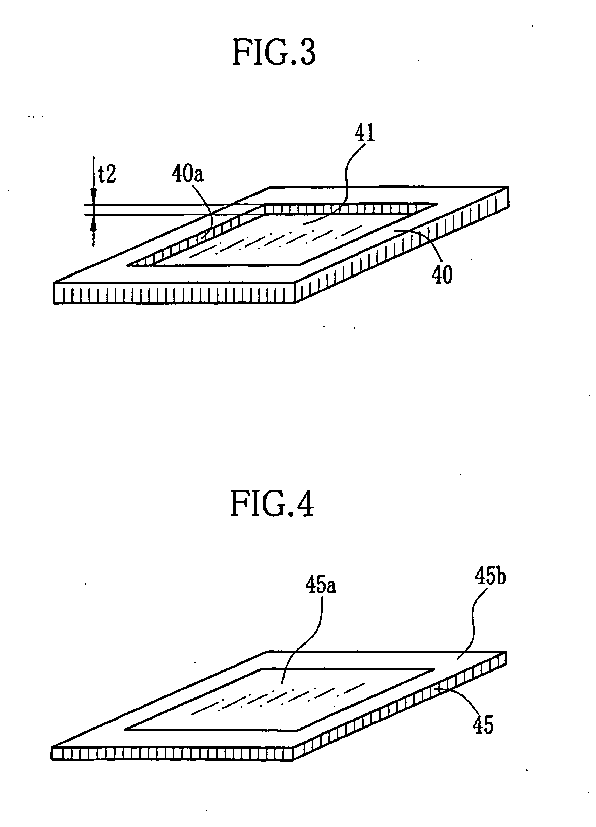

As shown in Fig. 3, a casting area 41 may be formed by cutting a center portion of a support 40. In this case, a height t2 (mm) of the step 40a is preferably in a predetermined range. Further, as for the material of the support 40, materials which are easily cut and advantageous in terms of cost are used.

In Fig. 4, a casting area 45a of the support 45 is formed of the material whose contact angle to the liquid 14 is small, that is, the material onto which the liquid 14 is easily spread (hereinafter, such material is called the material for the casting area). However, the area 45b surrounding the casting area 45a (hereinafter referred to as a surrounding area 45b) is formed of the material whose contact angle is large, that is, the material onto which the liquid 14 is not easily spread. Thereby, when the liquid 14 is cast onto the casting area 45a, the liquid 14 is spread to the casting area 45a, but is prevented from spreading to the surrounding area 45b.

To form the casting area 45a, the above described material for the casting area may be adhered to the support substrate 50, or a part of the support substrate may be processed to have a depression section to fit the material for the casting area therein. It is also possible to perform processing to the surface of the support substrate to decrease the contact angle thereof to form the casting area 45a.

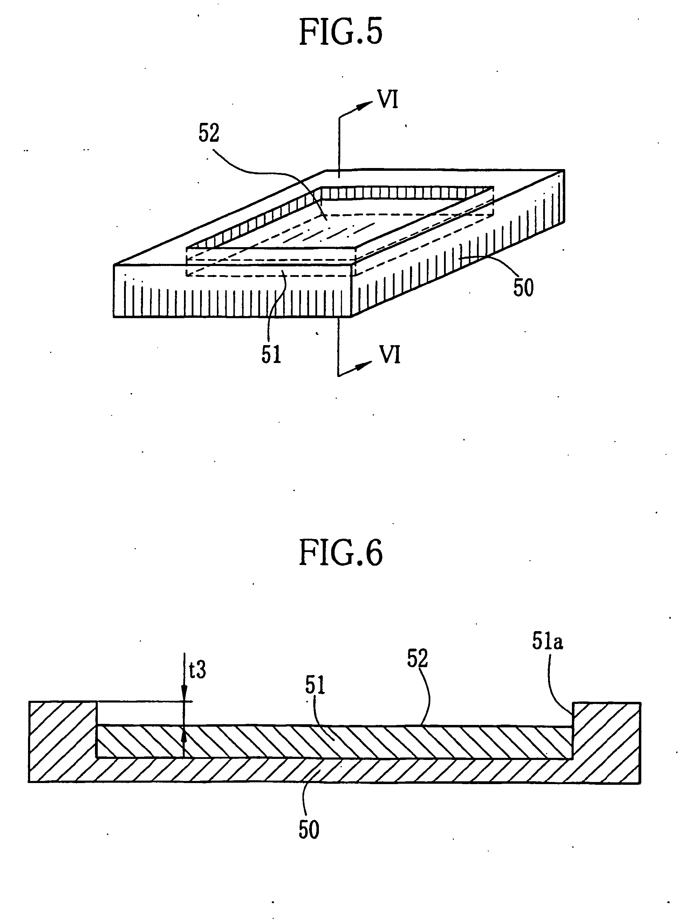

In Figs. 5 and 6, a casting area 52 is formed by fitting a support 51 in the depression section of a support substrate 50. As for the material of the support substrate 50, the material with excellent strength and solvent resistance at low cost is preferably used. As the material of the support 51, the material with excellent flexibility and solvent resistance at low cost is preferably used. In this embodiment, a height of a step 51a is a difference between the depth of the depression section and the thickness of the support 51a. The height t3 of the step 51a is preferably in a predetermined range.

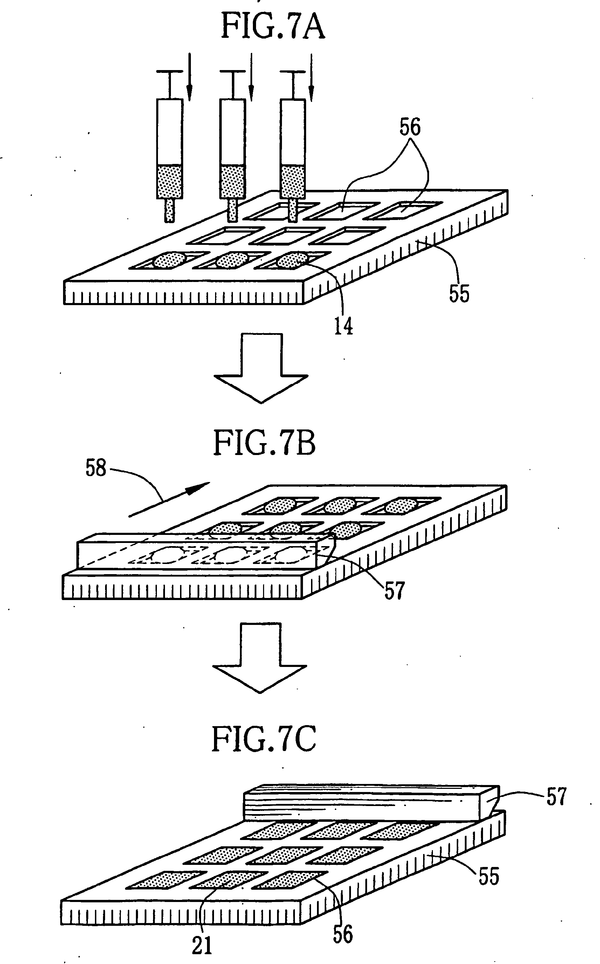

In the present invention, the number of the casting area formed on the support is not limited to one. As shown in Fig 7A, nine casting areas 56 are formed in a support 55. Note that the number of the casting areas formed in one support is not limited to nine. As shown in Fig. 7B, a scraper blade 57 is laterally moved after the liquid 14 is cast onto each casting area 56. As shown in Fig. 7C, the casting film 21 is formed in each casting area 56. In the present invention, other than the above method, the scraper blade 57 may be fixed and the support 55 may be laterally moved instead. Further, the roller and the like may be used instead of the scraper blade 57.

A moving direction of the scraper blade 57 is indicated by an arrow 58. The casting area formed on the surface of the support 55 is defined by the step. The step is formed at least on a part of an outer periphery of a desired casting area. The step may be formed in the same manner even when the support is moved instead of the scraper blade 37.

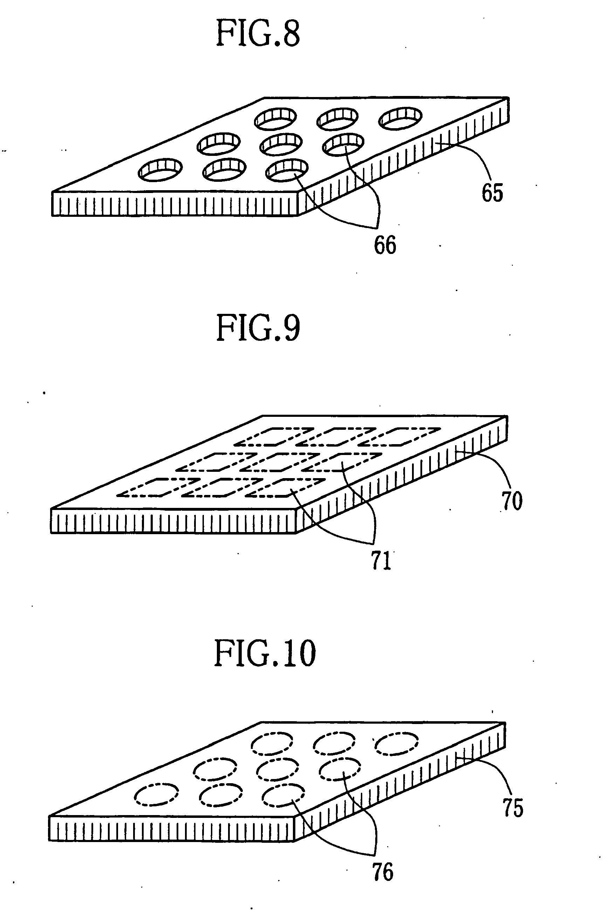

In Fig. 8, an oval casting area 66 is formed in a support 65. Thus, the shape of the casting area formed in the support of the present invention is not limited to a rectangular shape. Other shapes such as approximate circles, approximate ovals, polygons and so forth may be used. Further, the number of the casting areas 66 is not limited to nine.

In Fig. 9, nine rectangular casting areas 71 are provided in the support 70. In Fig. 10, nine oval casting areas 76 are formed in a support 75. The casting areas 71, 76 in the support 70, 75 are formed by reducing the contact angle of the surface to the liquid 14 in the same manner as the support shown in Fig. 45. In this embodiment, the numbers of the casting areas 71, 76 are not limited to nine.

The casting film is intermittently formed by using either of the supports 16, 40, 45, 51, 55, 65, 70 and 75. The self-assembled construction is then subject to the condensation process 22 and the drying process 23 to form the self-assembled construction. The self-assembled construction may also be continuously formed by placing plural supports of one of the above types on a belt and continuously moving the belt. Further, after the formation of the self-assembled construction, the support may be used as the protective layer. That is, the protective layer protects the self-assembled construction from external environment, for instance, absorption of water, a contamination caused by a contact of an operator and so forth until the self-assembled construction is actually used. Just before using the self-assembled construction, the support, that is, the protective layer is peeled off. Thereby, the protection of the self-assembled construction 24 becomes possible without an additional process. Note that the condensation process 22 and the drying process 23 will be described later in detail.

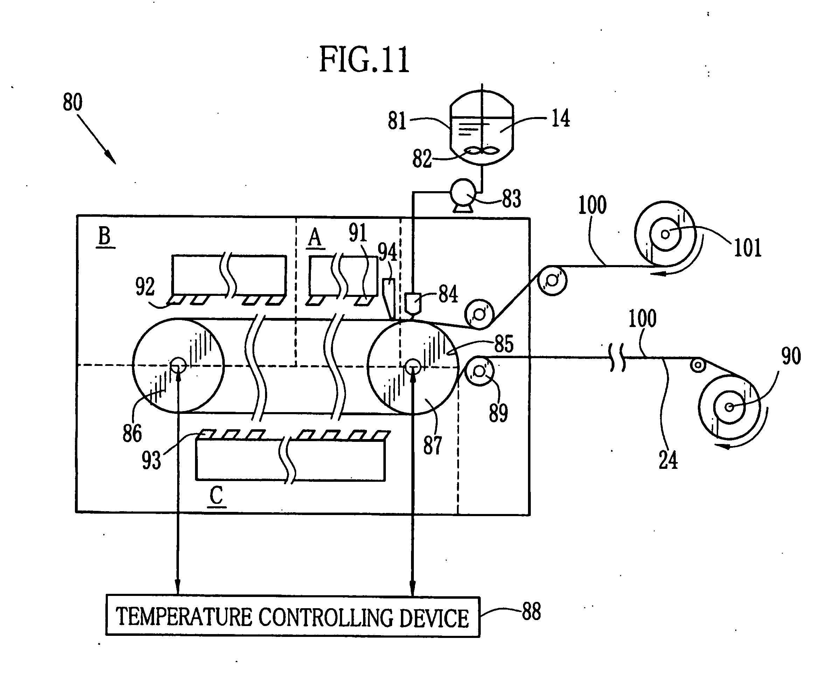

In Fig. 11, in a self-assembled construction producing apparatus 80 for continuously producing the self-assembled construction 24 of the present invention, the liquid 14 is stored in a tank 81. A stirring blade 82 is provided in the tank 81. The liquid is uniformly mixed by rotating the stirring blade 82. The liquid 14 is sent to a casting die 84 through a pump 83. Below the casting die 84, a belt 85 is bridged across rotatable rollers 86, 87. The rollers 86, 87 are rotated by a driving device (not shown) to run the belt 88 continuously around these rollers 86, 87. A temperature controlling device 88 is attached to the rollers 86, 87. The temperature of the rollers 86, 87 is adjusted by the temperature controlling device 88 to control the temperature of the belt 85 contacting with each roller.

In this embodiment, one of the above casting areas is continuously formed in a continuous support (hereinafter referred to as a web) 100. In addition, a feed device 101 for continuously transporting the web 100 to the belt 85 is provided. Further, a peel roller 89 and a winding device 90 are provided. The peel roller 89 supports the web 100 when the web 100 is peeled off from the belt 85 after forming the self-assembled construction. The peeled web 100 is wound by the winding device 90.

An air outlet 91 for blowing air containing a large amount of water vapor (hereinafter referred to as condensation air) is provided above the belt 85 in an upstream direction. An air outlet 92 for blowing dry air which predries the casting film 21 is provided above the belt 85 in a downstream direction. An air outlet 93 for blowing drying air which dries the casting film 21 is provided below the belt 85. A section in which the air outlet 91 is provided is referred to as a condensation zone A in which the droplets are formed in the casting film 21. A section in which the air outlet 92 is provided is referred to as a predrying zone B in which the organic solvent evaporates prior to the droplets. A section in which the air outlet 93 is provided is referred to as a drying zone C in which the droplets in the casting film 21 evaporates as the water vapor. Note that the positions of the air outlets 91-93 are not limited to those illustrated in Fig. 11.

Below the casting die 84, a scraper blade 94 to scrape off the redundant liquid 14 is provided.

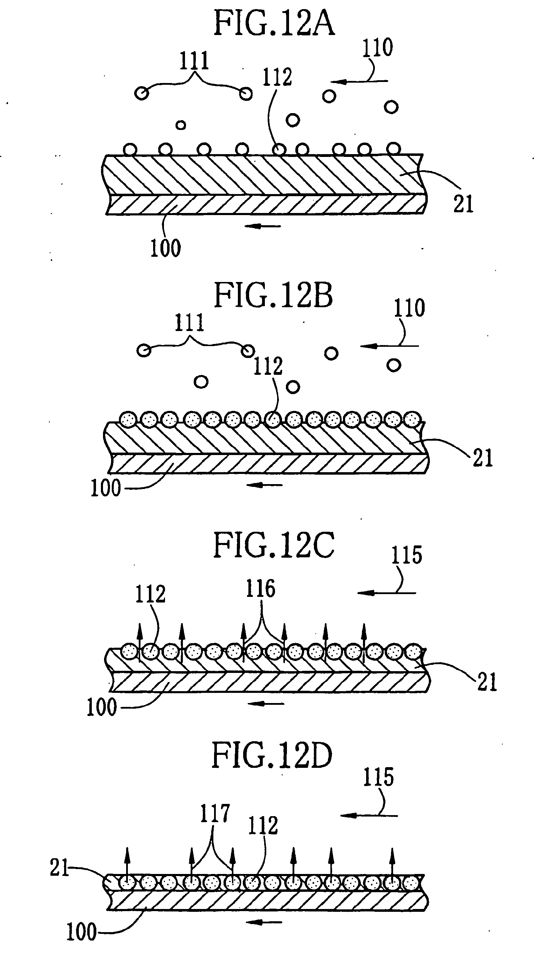

In the casting process 20, the liquid 14 is cast from the casting die 84 onto the surface of the web 100 on the belt 85. The redundant liquid 14 is scraped off by the scraper blade 94. Then, the condensation process 22 and the drying process 23 are performed which will be described later together with Figs. 12A to 12D. Note that in Figs. 12A to 12D, the belt 85 which supports the web 100 is omitted. As shown in Fig. 12A, the casting film 21 is formed on the web 100. The surface temperature of the casting film 21 (hereinafter referred to as the film surface temperature) is preferably 0°C or above. When the film surface temperature is below 0° C, the uniform structure with the desired dimensions may not be formed due to the solidification of the droplets in the casting film 21.

It is more preferable to control the temperature of the belt 85 through the rollers 86, 87 by using the temperature controlling device 88. For instance, a flow passage is provided inside the rollers 86, 87 to feed the heat transfer medium therethrough. The lowest temperature of the belt 85 is preferably set at 0° C and above. Further, the highest temperature of the belt 85 is preferably set below the boiling point of the organic solvent 11 in the liquid 14, and more preferably at (the boiling point of the organic solvent - 3)°C. Thereby, the solidification of the condensed moisture and abrupt evaporation of the organic solvent 11 in the liquid 14 are prevented. Accordingly, the uniformly structured self-assembled construction 24 is obtained. Further, the temperature distribution of the casting film 21 is within ±3°C in the width direction. Correspondingly, the temperature distribution of the film surface temperature is also within ± 3° C. By reducing the temperature distribution of the casting film 21 in the width direction, anisotropy is prevented in forming the pores in the self-assembled construction 24.

The transporting direction of the belt 85 is preferably set within ± 10° to the horizontal direction. By adjusting the transporting direction, the shapes and conditions of droplets 112 are controlled. By controlling the shapes and conditions of the droplets 112, the shapes and conditions of the pores are controlled.

Air 110 is sent from the air outlet 91. A dew point TD1 (°C) of the air 110 and the surface temperature TL (°C) of the casting film 21 passing through the condensation zone A satisfy the following condition: 0°C≤ (TD1-TL). Further, the dew point TD1 and the surface temperature TL preferably satisfy the following conditions: 0° C≤ (TD1-TL) ≤ 80° C, particularly 5° C≤ (TD1-TL) ≤ 60° C, especially 10° C≤ (TD1-TL) ≤ 40°C. If (TD1-TL) is below 0° C, the condensation may be difficult to occur. If (TD1-TL) exceeds 80° C, it becomes difficult to control the dimensions of the pores or the uniformity thereof due to the abrupt condensation and drying. Although the temperature of the air 110 is not particularly limited, it is preferably in a range of not less than 5° C and not more than 100° C. When the temperature of the air 110 is below 5°C, the droplets 112 are not likely to evaporate, so that the uniformly structured self-assembled construction 24 may not be obtained. When the temperature of the air 110 exceeds 100° C, the moisture in the casting film 21 may be evaporated before forming the droplets 21.

As shown in Fig. 12A, in the condensation zone A, moisture 111 (illustrated as a model) in the air 110 is condensed on the casting film 21 to form the droplets 112. Then, as shown in Fig. 12B, the moisture continues to condense to grow the droplets 112 by nucleation of the droplets 112. As shown in Fig. 12C, in the predrying zone B, when the dry air is blown onto the casting film 21, the organic solvent 116 evaporates from the casting film 21. At this time, the moisture in the droplets 112 is also evaporated. However, the evaporation speed of the organic solvent 116 is faster than that of the moisture. For that reason, the shapes and conditions of the droplets become uniform by the surface tension caused by the evaporation of the organic solvent 116 and thus the droplets are spontaneously arranged in the systematic form. In addition, the polymer compounds in the casting film 21 are easily agglomerated around the fine particles (not shown) contained in the casting film 21. As shown in Fig. 12D, when the drying is promoted in the drying zone C, the moisture in the droplets 112 is evaporated as water vapor 117. At this time, the agglomeration of the polymer compounds around the fine particles is also promoted to form the circumference of the pores. Thus the shapes of the pores become excellently uniform.

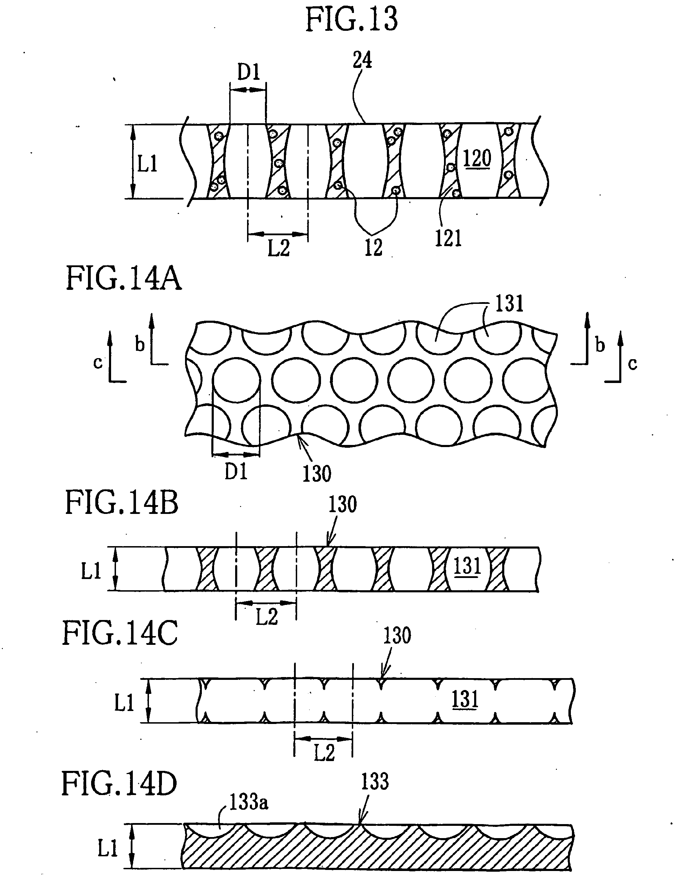

When the droplets 112 are evaporated from the casting film 21, portions in which the droplets 112 are formed become pores 120, and thus the self-assembled construction 24 is obtained as shown in Fig. 13. Walls 121 whose main component is the polymer compounds are formed around the pores 120. As described above, a plurality of fine particles 12 are contained in the wall 121. However, as an actual amount, a trace quantity of the fine particles 12 is contained. (Note in Fig. 13, the fine particles 12 are exaggerated for the sake of explanation.) Accordingly, the fine particles 12 do not affect the properties of the self-assembled construction 24. In the present invention, the shapes of the self-assembled construction 24 are not particularly limited.

In the present invention, the air 110 is supplied parallel to the moving direction of the casting film 21 as a concurrent flow. When the air 110 is supplied as a countercurrent flow, the film surface may not be formed uniformly. As a result, the growth of the droplets may be inhibited. Further, the relative speed of the blowing speed of the air 110 to the moving speed of the casting film 21 is preferably not less than 0.1m/s and not more than 20m/s, particularly not less than 0.5m/s and not more than 15m/s, especially not less than 2m/s and not more than 10m/s. If the relative speed is less than 0.1m/s, the casting film 21 is possibly advanced to the predrying zone B before the droplets 112 grow to a sufficient size in the casting film 21. If the relative speed is more than 20m/s, the surface of the casting film 21 may become nonuniform and/or the condensation may not advance properly.

In the present invention, the time the casting film 21 takes to pass through the condensation zone A is preferably not less than 0.1 seconds and not more than 100 seconds. If the passing time is less than 0.1 seconds, the pores are formed before the droplets 44 growing to the sufficient size. Accordingly, it may be-difficult to obtain the pores of the intended size. If the passing time is more than 100 seconds, the size of the droplets 112 becomes too large. As a result, the desired structure, for instance, the honeycomb-structure is not possibly obtained.

The relative speed of the drying air 115 for drying the casting film 21 and the casting film 21 is preferably not less than 0.1 m/s and not more than 20 m/s, particularly not less than 0.5 m/s and not more than 15 m/s, especially not less than 2 m/s and not more than 10 m/s in the predrying zone B and the drying zone C. If the relative speed is less than 0.1 m/s, the evaporation of the droplets 112 may not advance properly, and thus, the productivity is possibly lowered. If the relative speed is more than 20 m/s, the droplets 112 are rapidly evaporated, so that the shape of the pores 120 may not be uniform.

When a dew point of the drying air 115 is defined as TD2 (°C), the TD2 (°C) and the surface temperature TL (°C) preferably satisfy the following condition: (TL-TD2) ≥ 1°C. Thereby, it becomes possible to stop the growth of the droplets 112 in the casting film 21 in the predrying zone B and the drying zone C to evaporate the droplets 112 as the water vapor 117.

It is also possible to dry the casting film 21 by a decompression drying method instead of or in addition to supplying the dry air from the air outlets 91 to 93 through 2D nozzles (two-dimensional nozzles). The decompression drying method enables to control the evaporation speed of the organic solvent 116 and the droplets 112. Thereby, it becomes possible to form the droplets 112 in the casting film 21, evaporate droplets 112 concurrently with the evaporation of the organic solvent, and change the size and shape of the pores 120 formed at the position of the droplets 112 after the evaporation of the droplets.

In addition, a condenser may be provided at a position apart from the film by a distance about 3 mm to 20 mm. A groove is formed on the surface of the condenser, and the temperature of the surface of the condenser is lowered than that of the film surface. The water vapor and the solvent vapor from the casting film 21 are condensed on the surface of the condenser to dry the casting film 21. By applying at least one of the above drying methods, a dynamic influence on the film surface of the casting film 21 is reduced during the drying of the film surface. Thus, it becomes possible to obtain the smoother film surface.

The self-assembled construction 24 in which the drying is advanced and the web 100 are peeled from the belt 85 with being held by the peeling device 89, and then wound by the winding device 90. Although the transporting speed of the self-assembled construction 24 is not particularly limited, the transporting speed is preferably not less than 0.1 m/min and not more than 60 m/min. If the transporting speed is less than 0.1 m/min, the productivity is reduced which is not favorable in terms of cost. If the transporting speed exceeds 60m/min, an excessive tension is applied to the self-assembled construction 24 being transported. As a result, defects such as rips, irregularity in the structure and so forth may occur. Thus, the
self-assembled construction 24 is continuously produced by using the above method.

Figs. 14A-14D are schematic views of the self-assembled construction produced in another embodiments. A self-assembled construction 130 is produced without containing the fine particles in the liquid 14. Fig. 14A is a plan view of the self-assembled construction produced according to the present invention. Fig. 14B is a section view of Fig. 14A taken along the line b-b. Fig. 14C is a section view of Fig. 14A taken along the line c-c. Further, Fig. 14D is a section view of a self-assembled construction in another embodiment. Note that the plan view of the Fig. 14D is omitted since the plan view thereof is similar to that of Fig. 14A. The self-assembled construction 130 is a film in which a plurality of pores are densely formed. As shown in Fig. 14A, pores 131 are formed in the honeycomb structure inside the self-assembled construction 130. The pores 131 are systematically arranged in approximately the same shape and size. As shown in Figs. 14B and 14C, the pores 131 may be formed as through holes within the self-assembled construction 130. As shown in Fig. 14D, it is also possible to form the pores 130 as depressions 133a on one surface of the self-assembled construction 133. In this embodiment, components in the self-assembled construction 24, mainly the polymer compounds, are moved away from the droplets and agglomerated. For that reason, the self-assembled construction 130 is produced by self-agglomeration of the polymer compounds without the presence of the fine particles. Descriptions of L1 and L2 in Figs. 14A-14D are omitted since they are similar to Fig. 13.

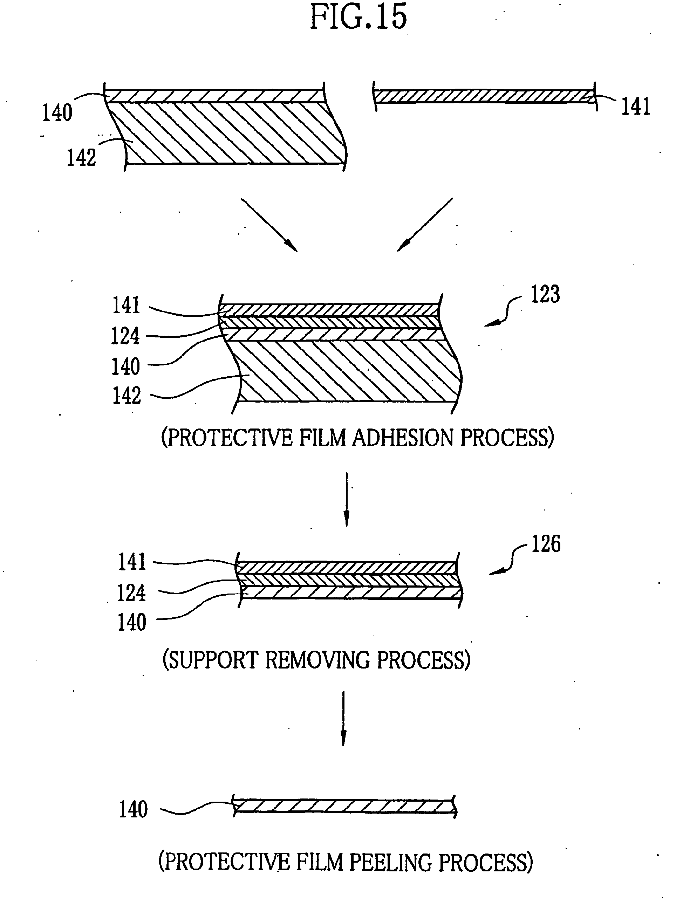

In Fig. 15, a method for protecting the self-assembled construction is described. In a protective layer adhesion process 122, a protective film 141 is adhered to the self-assembled construction 140 before peeling off the self-assembled construction 140 from the support 142. Note that the protective film 141 is adhered in opposition to the surface of the self-assembled construction 140 contacting the support 142. It is also possible to provide an adhesive layer 124 when the protective layer 141 is attached to the self-assembled construction 140. In this state, the self-assembled construction is referred to as a self-assembled construction 123 before being peeled off from the support 142 and coated with the protective layer 141.

In a support removing process 125, the self-assembled construction 123 is peeled off from the support 142. The peeled film is referred to as a self-assembled construction 126 coated with the protective film 141. Thereby, the deposition of foreign matters and the like are prevented in the self-assembled construction. Accordingly, the above defects are prevented at the time of actually using the self-assembled construction 140.

Prior to the use of the self-assembled construction, in a protective film peeling process 127, the protective film 141 is peeled off to obtain a self-assembled construction 140. It is preferable to peel off the adhesive layer 124 concurrently with peeling off the protective layer 141.

Hereinafter, the present invention is concretely explained in the following embodiment. However, the scope of the present invention is not limited to the following embodiment.

### [Embodiment]

In an experiment 1, poly-ε-caprolactone having average molecular weight of 70,000 to 100,000 shown in [Chemical formula 1] and amphipathic polyacrylamide shown in [Chemical formula 2] were mixed at a weight ratio of 10:1 to be used as a solute for the liquid 14. Dichloromethane was used as a solvent. The liquid 14 was prepared so that the concentration of the polymer compound became 0.2wt.%. The viscosity of the liquid 14 was 0.05 Pa·s (which is equal to 50cP) measured by the known method. As the support 16, the substrate 30 with the frame 31 shown in Fig. 2 is used. Further, the thickness t1 is 0.5mm. After the liquid 14 is cast onto the casting area 30a, the scraper blade 33 is moved to form the casting film 21. The thickness of the casting film which is the wet film is 0.5mm.

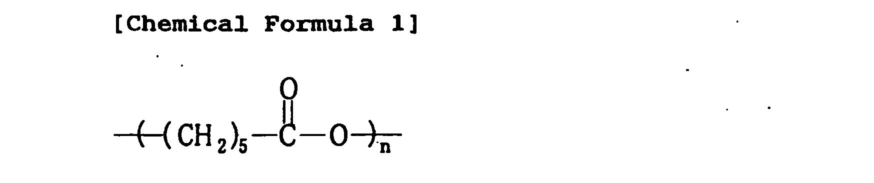

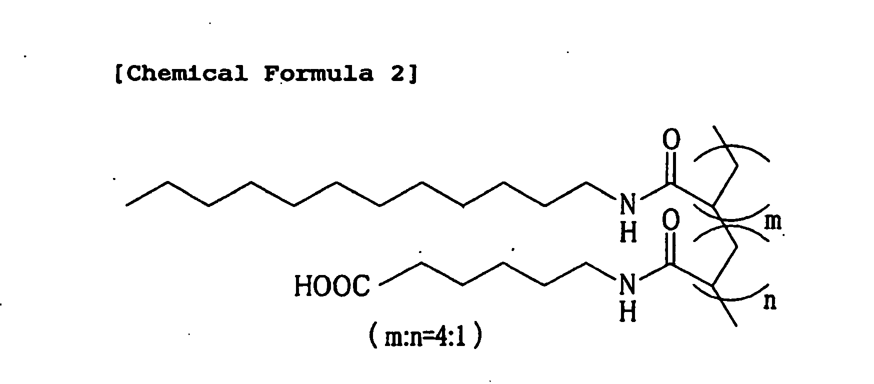

The condensation process 22 is performed by using the support 16 on which the casting film 21 is formed. The temperature of the air is set at 30°C and the dew point is controlled to be 20°C. The air is blown onto the surface of the casting film 21 at the blowing speed of 3m/s for the predetermined time. Thereafter, the drying process 23 is performed. First, the dry air at 60° C ± 3° C is blown onto the casting film 21 for predrying the casting film 21. Thereafter, the dry air at 110° C± 3° C is blown onto the casting film 21. Thereby, the self-assembled construction 24 is obtained having the honeycomb structure with the intended pore diameter D1 of 5µm, and the thickness L1 (µm) of 5µm.

The microstructure of the self-assembled construction 24 is observed through a scanning electron microscope (SEM) to evaluate the variations in a target diameter D1 (µm) of the pores 120. The evaluation is performed in the following four levels.
A: the variations are more than -5% and less than5% of the target diameter D1.
B: the variations are in a range of more than -10% and not more than -5%, or in a range of not less than 5% and less than 10% of the target diameter D1.
C: the variations are in a range of more than -20% and not less than -10%, or in a range of not less than 10% and less than 20% of the target diameter D1.
F: the variations are in a rage of not more than -20%, or not less than 20% of the target diameter D1.
The variations in the target diameter D1 in the experiment 1 is evaluated as B.

An experiment 2 is performed with the same condition as the experiment 1 except that the fine particles are added. The result of the experiment 2 is evaluated as A. An experiment 3 which is a comparison experiment to the experiment 1 is performed with the same condition as the experiment 1 except that the support without the frame 31 is used. In the experiment 3, the shape in the edge of the casting film is nonuniform. Accordingly, the result of the experiment 3 is evaluated as F by the observation through the SEM.

### Industrial Applicability

The present invention is applicable to the production of the self-assembled construction in the film form used as the optical and electronic materials.

## Claims

1. A method for producing a self-assembled construction comprising the steps of
forming a casting film by casting a liquid including an organic solvent and a lipophilic polymer compound onto a support, said organic solvent being selected from chloroform, dichloromethane, tetrachloromethane, cyclohexane and methyl acetate, the viscosity of said liquid being in the range of from 1 x 10⁻⁴ to 10 Pa·s, and the thickness of said casting film immediately after being formed being in the range of from 0.05 to 1.5 mm;
forming a plurality of droplets in said casting film; evaporating said organic solvent and said droplets from said casting film for forming pores at positions of said droplets;
and
peeling off said casting film in which said pores are formed from said support.

2. A producing method according to claim 1, wherein a casting surface of said support has a first area onto which said liquid is cast, and a second area in which a contact angle to said liquid is larger than that in said first area to prevent spreading of said liquid.

3. A producing method according to claim 2, wherein said liquid is cast onto said support continuously or intermittently.

4. A producing method according to claim 2, wherein said support protects said self-assembled construction when said self-assembled construction is being stored.

5. A producing method according to claim 2, wherein said liquid is cast onto said support with a long length while said support is being transported, and said casting film is humidified to form said droplets.

6. A producing method according to claim 2, wherein said liquid is cast onto said plurality of supports while said supports are being transported, and said casting films are humidified to form said droplets.

7. A producing method according to claim 1, wherein a protective film for protecting said self-assembled construction is attached to said self-assembled construction, and said self-assembled construction is peeled off together with said protective film from said support.

8. A producing method according to claim 7, said protective film and said self-assembled construction are attached through an adhesive material.

9. A producing method according to claim 1, wherein a surface roughness (Ra) of a casting surface of said support is not less than 0.05µm and not more than 5µm.

10. The producing method according to claim 1, wherein said support has a step for defining an edge of said casting film.

11. A producing method according to claim 10, wherein said step is formed by previously processing a surface of said support.

12. A producing method according to claim 10, wherein said step is formed by fixing a frame member on said support.

13. A producing method according to claim 10, wherein a height of said step is a difference between a depth of a depressed section of a substrate in which said support is fit and a thickness of said support.

14. A producing method according to claim 10, said liquid is cast while said liquid or said support is being moved.

15. A producing method according to claim 10, wherein plural casting areas defined by said frame members are formed on said support.

16. A producing method according to claim 10, wherein a casting surface of said support has a first area onto which said liquid is cast, and a second area in which a contact angle to said liquid is larger than that in said first area to prevent spreading of said liquid.

17. A producing method according to claim 10, wherein said liquid is cast onto said support continuously or intermittently.

18. A producing method according to claim 10, wherein said support protects said self-assembled construction when said self-assembled construction is being stored.

19. A producing method according to claim 10, wherein said liquid is cast onto said support with a long length while said support is being transported, and said casting film is humidified to form said droplets.

20. A producing method according to claim 10, wherein said liquid is cast onto said plurality of supports while said supports are being transported, and said casting films are humidified to form said droplets.

21. A producing method according to claim 10, wherein a protective film for protecting said self-assembled construction is attached to said self-assembled construction, and said self-assembled
construction is peeled off together with said protective film from said support.

22. A producing method according to claim 21, said protective film and said self-assembled construction are attached through an adhesive material.

23. A producing method according to claim 10, wherein a surface roughness (Ra) of said casting surface of said support is not less than 0.05µm and not more than 5µm.

24. The producing method according to claim 1, wherein the casting surface of said support has a first area onto which said liquid is cast, and a second area in which the contact angle to said liquid is larger than that in said first area to prevent spreading of said liquid.

25. A producing method according to claim 24, wherein said liquid is cast onto said support continuously or intermittently.

26. A producing method according to claim 24, wherein said support protects said self-assembled construction when said self-assembled construction is being stored.

27. A producing method according to claim 24, wherein said liquid is cast onto said support with a long length while said support is being transported, and said casting film is humidified to form said droplets.

28. A producing method according to claim 24, wherein said liquid is cast onto said plurality of supports while said supports are being transported, and said casting films are humidified to form said droplets.

29. A producing method according to claim 24, wherein a protective film for protecting said self-assembled construction is attached to said self-assembled construction, and said self-assembled construction is peeled off together with said protective film from said support.

30. A producing method according to claim 29, said protective film and said self-assembled construction are attached through an adhesive material.

31. A producing method according to claim 24, wherein a surface roughness (Ra) of a casting surface of said support is not less than 0.05µm and not more than 5µm.

## Patentansprüche

1. Verfahren zum Herstellen eines selbstorganisierten Aufbaus, umfassend die Schritte,
Bilden einer Gussfolie durch Gießen einer Flüssigkeit, die ein organisches Lösungsmittel und eine lipophile Polymerkomponente enthält, auf einen Träger, wobei besagtes organisches Lösungsmittel ausgewählt aus Chloroform, Dichlormethan, Tetrachlormethan, Cyclohexan und Methylacetat ist, wobei die Viskosität der besagten Flüssigkeit im Bereich von 1 x 10⁻⁴ bis 10 Pa·s ist, und die Dicke der besagten Gussfolie, unmittelbar nachdem sie gebildet wurde, im Bereich von 0,05 bis 1,5 mm ist;
Bilden einer Vielzahl von Tröpfchen in besagter Gussfolie;
Verdampfen des besagten organischen Lösungsmittels und besagter Tröpfchen von besagter Gussfolie, um Poren an den Positionen der besagten Tröpfchen zu bilden; und
Abziehen von besagter Gussfolie, in der besagte Poren gebildet werden, von besagtem Träger.

2. Herstellungsverfahren gemäß Anspruch 1, wobei eine Gussoberfläche von besagtem Träger einen ersten Bereich besitzt, auf den besagte Flüssigkeit gegossen wird, und einen zweiten Bereich, in dem ein Kontaktwinkel zu besagter Flüssigkeit größer als der in besagtem ersten Bereich ist, und das Ausbreiten von besagter Flüssigkeit zu verhindern.

3. Herstellungsverfahren gemäß Anspruch 2, wobei besagte Flüssigkeit auf besagten Träger kontinuierlich oder intermittierend gegossen wird.

4. Herstellungsverfahren gemäß Anspruch 2, wobei besagter Träger besagten selbstorganisierten Aufbau schützt, wenn besagter selbstorganisierter Aufbau gelagert wird.

5. Herstellungsverfahren gemäß Anspruch 2, wobei besagte Flüssigkeit auf besagten Träger mit einer langen Länge gegossen wird, während besagter Träger transportiert wird, und besagte Gussfolie befeuchtet wird, um besagte Tröpfchen zu bilden.

6. Herstellungsverfahren gemäß Anspruch 2, wobei besagte Flüssigkeit auf die besagte Vielzahl von Trägern gegossen wird, während besagte Träger transportiert werden, und besagte Gussfolien befeuchtet werden, um besagte Tröpfchen zu bilden.

7. Herstellungsverfahren gemäß Anspruch 1, wobei eine Schutzfolie zum Schützen von besagtem selbstorganisierten Aufbau an besagten selbstorganisierten Aufbau angelagert wird, und besagter selbstorganisierter Aufbau zusammen mit besagter Schutzfolie von besagtem Träger abgezogen wird.

8. Herstellungsverfahren gemäß Anspruch 7, wobei besagte Schutzfolie und besagter selbstorganisierter Aufbau mittels eines Klebstoffmaterials angelagert werden.

9. Herstellungsverfahren gemäß Anspruch 1, wobei eine Oberflächenrauhigkeit (Ra) einer Gussoberfläche von besagtem Träger nicht weniger als 0,05 µm und nicht mehr als 5 µm ist.

10. Herstellungsverfahren gemäß Anspruch 1, wobei besagter Träger eine Stufe zum Definieren einer Kante von besagter Gussfolie besitzt.

11. Herstellungsverfahren gemäß Anspruch 10, wobei besagte Stufe durch vorheriges Bearbeiten einer Oberfläche von besagtem Träger gebildet wird.

12. Herstellungsverfahren gemäß Anspruch 10, wobei besagte Stufe durch Fixieren eines Rahmenbauteils auf besagtem Träger gebildet wird.

13. Herstellungsverfahren gemäß Anspruch 10, wobei die Höhe von besagter Stufe der Unterschied zwischen einer Tiefe eines vertieften Bereichs eines Substrats, in dem besagter Träger eingepasst ist, und einer Dicke von besagtem Träger ist.

14. Herstellungsverfahren gemäß Anspruch 10, wobei besagte Flüssigkeit gegossen wird, während besagte Flüssigkeit oder besagter Träger bewegt wird.

15. Herstellungsverfahren gemäß Anspruch 10, wobei mehrere Gussbereiche, die durch besagte Rahmenbauteile definiert sind, auf besagtem Träger gebildet werden.

16. Herstellungsverfahren gemäß Anspruch 10, wobei eine Gussoberfläche von besagtem Träger einen ersten Bereich besitzt, auf den besagte Flüssigkeit gegossen wird, und einen zweiten Bereich, in dem ein Kontaktwinkel zu besagter Flüssigkeit größer als der in besagtem ersten Bereich ist, um das Ausbreiten von besagter Flüssigkeit zu verhindern.

17. Herstellungsverfahren gemäß Anspruch 10, wobei besagte Flüssigkeit auf besagten Träger kontinuierlich oder intermittierend gegossen wird.

18. Herstellungsverfahren gemäß Anspruch 10, wobei besagter Träger besagten selbstorganisierten Aufbau schützt, wenn besagter selbstorganisierter Aufbau gelagert wird.

19. Herstellungsverfahren gemäß Anspruch 10, wobei besagte Flüssigkeit auf besagten Träger mit einer langen Länge gegossen wird, während besagter Träger transportiert wird, und besagte Gussfolie befeuchtet wird, um besagte Tröpfchen zu bilden.

20. Herstellungsverfahren gemäß Anspruch 10, wobei besagte Flüssigkeit auf die besagte Vielzahl von Trägern gegossen wird, während besagte Träger transportiert werden, und besagte Gussfolien befeuchtet werden, um besagte Tröpfchen zu bilden.

21. Herstellungsverfahren gemäß Anspruch 10, wobei eine Schutzfolie zum Schützen von besagtem selbstorganisierten Aufbau an besagten selbstorganisierten Aufbau angelagert wird, und besagter selbstorganisierter Aufbau zusammen mit besagter Schutzfolie von besagtem Träger abgezogen wird.

22. Herstellungsverfahren gemäß Anspruch 21, wobei besagte Schutzfolie und besagter selbstorganisierter Aufbau mittels eines Klebstoffmaterials angelagert werden.

23. Herstellungsverfahren gemäß Anspruch 10, wobei eine Oberflächenrauhigkeit (Ra) von besagter Gussoberfläche von besagtem Träger nicht weniger als 0,05 µm und nicht mehr als 5 µm ist.

24. Herstellungsverfahren gemäß Anspruch 1, wobei die Gussfolie von besagtem Träger einen ersten Bereich besitzt, auf den besagte Flüssigkeit gegossen wird, und einen zweiten Bereich, in dem der Kontaktwinkel zu besagter Flüssigkeit größer als der in besagtem ersten Bereich ist, um das Ausbreiten von besagter Flüssigkeit zu verhindern.

25. Herstellungsverfahren gemäß Anspruch 24, wobei besagte Flüssigkeit auf besagten Träger kontinuierlich oder intermittierend gegossen wird.

26. Herstellungsverfahren gemäß Anspruch 24, wobei besagter Träger den besagten selbstorganisierten Aufbau schützt, wenn besagter selbstorganisierter Aufbau gelagert wird.

27. Herstellungsverfahren gemäß Anspruch 24, wobei besagte Flüssigkeit auf besagten Träger mit einer langen Länge gegossen wird während besagter Träger transportiert wird, und besagte Gussfolie befeuchtet wird, um besagte Tröpfchen zu bilden.

28. Herstellungsverfahren gemäß Anspruch 24, wobei besagte Flüssigkeit auf besagte Vielzahl von Trägern gegossen wird, während besagte Träger transportiert werden, und besagte Gussfolien befeuchtet werden, um besagte Tröpfchen zu bilden.

29. Herstellungsverfahren gemäß Anspruch 24, wobei ein Schutzfilm zum Schützen von besagtem selbstorganisiertem Aufbau an besagten selbstorganisierten Aufbau angelagert wird, und besagter selbstorganisierter Aufbau zusammen mit besagter Schutzfolie von besagtem Träger abgezogen wird.

30. Herstellungsverfahren gemäß Anspruch 29, wobei besagte Schutzfolie und besagter selbstorganisierter Aufbau mittels eines Klebstoffmaterials angelagert werden.

31. Herstellungsverfahren gemäß Anspruch 24, wobei eine Oberflächenrauhigkeit (Ra) einer Gussoberfläche von besagtem Träger nicht weniger als 0,05 µm und nicht mehr als 5 µm ist.

## Revendications

1. Procédé de production d'une construction auto-assemblée comprenant les étapes consistant à
former un film de coulée par coulage d'un liquide comprenant un solvant organique et un composé de polymère lipophile sur un support, ledit solvant organique étant choisi parmi le chloroforme, le dichlorométhane, le tétrachlorométhane, le cyclohexane et l'acétate de méthyle, la viscosité dudit liquide étant comprise dans la plage allant de 1 x 10⁻⁴ à 10 Pa.s, et l'épaisseur dudit film de coulée immédiatement après avoir été formé se situant dans la plage allant de 0,05 à 1,5 mm ;
former une pluralité de gouttelettes dans ledit film de coulée ;
évaporer ledit solvant organique et lesdites gouttelettes dudit film de coulée pour former des pores à des positions desdites gouttelettes ; et
décoller ledit film de coulée dans lequel lesdits pores sont formés dudit support.

2. Procédé de production selon la revendication 1, dans lequel une surface de coulée dudit support présente une première région sur laquelle ledit liquide est coulé, et une seconde région dans laquelle un angle de contact avec ledit liquide est plus grand que celui de ladite première région pour empêcher un étalement dudit liquide.

3. Procédé de production selon la revendication 2, dans lequel ledit liquide est coulé sur ledit support de manière continue ou de manière intermittente.

4. Procédé de production selon la revendication 2, dans lequel ledit support protège ladite construction auto-assemblée lorsque ladite construction auto-assemblée est stockée.

5. Procédé de production selon la revendication 2, dans lequel ledit liquide est coulé sur ledit support avec une longueur longue tandis que ledit support est transporté, et ledit film de coulée est humidifié pour former lesdites gouttelettes.

6. Procédé de production selon la revendication 2, dans lequel ledit liquide est coulé sur ladite pluralité de supports tandis que lesdits supports sont transportés, et lesdits films de coulée sont humidifiés pour former lesdites gouttelettes.

7. Procédé de production selon la revendication 1, dans lequel un film protecteur pour protéger ladite construction auto-assemblée est fixé à ladite construction auto-assemblée, et ladite construction auto-assemblée est décollée conjointement audit film protecteur dudit support.

8. Procédé de production selon la revendication 7, dans lequel ledit film protecteur et ladite construction auto-assemblée sont fixés par le biais d'un matériau adhésif.

9. Procédé de production selon la revendication 1, dans lequel une rugosité de surface (Ra) d'une surface de coulée dudit support n'est pas inférieure à 0,05 µm ni supérieure à 5 µm.

10. Procédé de production selon la revendication 1, dans lequel ledit support comporte une marche pour définir un bord dudit film de coulée.

11. Procédé de production selon la revendication 10, dans lequel ladite marche est formée par un traitement préalable d'une surface dudit support.

12. Procédé de production selon la revendication 10, dans lequel ladite marche est formée par fixation d'un organe de cadre sur ledit support.

13. Procédé de production selon la revendication 10, dans lequel une hauteur de ladite marche est une différence entre une profondeur d'une section enfoncée d'un substrat dans laquelle ledit support est ajusté et une épaisseur dudit support.

14. Procédé de production selon la revendication 10, dans lequel ledit liquide est coulé pendant que ledit liquide ou ledit support est déplacé.

15. Procédé de production selon la revendication 10, dans lequel plusieurs régions de coulage définies par lesdits organes de cadre sont formées sur ledit support.

16. Procédé de production selon la revendication 10, dans lequel une surface de coulée dudit support présente une première région sur laquelle ledit liquide est coulé, et une seconde région dans laquelle un angle de contact avec ledit liquide est plus grand que celui de ladite première région pour empêcher un étalement dudit liquide.

17. Procédé de production selon la revendication 10, dans lequel ledit liquide est coulé sur ledit support de manière continue ou de manière intermittente.

18. Procédé de production selon la revendication 10, dans lequel ledit support protège ladite construction auto-assemblée lorsque ladite construction auto-assemblée est stockée.

19. Procédé de production selon la revendication 10, dans lequel ledit liquide est coulé sur ledit support avec une longueur longue tandis que ledit support est transporté, et ledit film de coulée est humidifié pour former lesdites gouttelettes.

20. Procédé de production selon la revendication 10, dans lequel ledit liquide est coulé sur ladite pluralité de supports tandis que lesdits supports sont transportés, et lesdits films de coulée sont humidifiés pour former lesdites gouttelettes.

21. Procédé de production selon la revendication 10, dans lequel un film protecteur pour protéger ladite construction auto-assemblée est fixé à ladite construction auto-assemblée, et ladite construction auto-assemblée est décollée conjointement audit film protecteur dudit support.

22. Procédé de production selon la revendication 21, dans lequel ledit film protecteur et ladite construction auto-assemblée sont fixés par le biais d'un matériau adhésif.

23. Procédé de production selon la revendication 10, dans lequel une rugosité de surface (Ra) de ladite surface de coulée dudit support n'est pas inférieure à 0,05 µm ni supérieure à 5 µm.

24. Procédé de production selon la revendication 1, dans lequel la surface de coulée dudit support présente une première région sur laquelle ledit liquide est coulé, et une seconde région dans laquelle un angle de contact avec ledit liquide est plus grand que celui de ladite première région pour empêcher un étalement dudit liquide.

25. Procédé de production selon la revendication 24, dans lequel ledit liquide est coulé sur ledit support de manière continue ou de manière intermittente.

26. Procédé de production selon la revendication 24, dans lequel ledit support protège ladite construction auto-assemblée lorsque ladite construction auto-assemblée est stockée.

27. Procédé de production selon la revendication 24, dans lequel ledit liquide est coulé sur ledit support avec une longueur longue tandis que ledit support est transporté, et ledit film de coulée est humidifié pour former lesdites gouttelettes.

28. Procédé de production selon la revendication 24, dans lequel ledit liquide est coulé sur ladite pluralité de supports tandis que lesdits supports sont transportés, et lesdits films de coulée sont humidifiés pour former lesdites gouttelettes.

29. Procédé de production selon la revendication 24, dans lequel un film protecteur pour protéger ladite construction auto-assemblée est fixé à ladite construction auto-assemblée, et ladite construction auto-assemblée est décollée conjointement audit film protecteur dudit support.

30. Procédé de production selon la revendication 29, dans lequel ledit film protecteur et ladite construction auto-assemblée sont fixés par le biais d'un matériau adhésif.

31. Procédé de production selon la revendication 24, dans lequel une rugosité de surface (Ra) d'une surface de coulée dudit support n'est pas inférieure à 0,05 µm ni supérieure à 5 µm.
